# EUROPEAN PATENT APPLICATION

(11) **EP 1 940 183 A1**
(43) Date of publication of application: **02.07.2008**
(21) Application number: 06782473.0
(22) Date of filing: 08.08.2006
(51) Int. Cl.: H04Q 7/22

(54) **WIRELESS COMMUNICATION SYSTEM, WIRELESS BASE STATION, AND WIRELESS COMMUNICATION METHOD**

(30) Priority: 18.10.2005 JP 2005302950
(71) Applicant: NEC Corporation, Minato-ku Tokyo 108-8001 (JP)
(72) Inventor: IWASAKI, Motoya, Tokyo 108-8001 (JP)
(74) Representative: Reeve, Nicholas Edward
(86) International application number: PCT/JP2006/315647
(87) International publication number: WO 2007/046183

(57) **Abstract**

A signal transmitted from a terminal is received by plural adjacent wireless base stations (110, 120), the signal received by antenna (111-3) of wireless base station (110) and antenna (121-1) of wireless base station (120) is amplified by reception amplification section (112-3, 122-1), the signal amplified by reception amplification section (122-1) is distributed by distribution section (123-1) to wireless base station (110), the signal distributed by distribution section (123-1) is combined with the signal amplified by reception amplification section (112-3) by demodulation section (114), and then demodulated.

## Description

### Technical Field

The present invention relates to a wireless communication system, a wireless base station, and a wireless communication method, and more specifically to a wireless communication system, a wireless base station, and a wireless communication method for performing hand over processing.

### Background Art

Generally, in the wireless communication system, the hand over processing performed by mobile terminals requires the procedure in a wireless base station control device for controlling a plurality of wireless base stations.

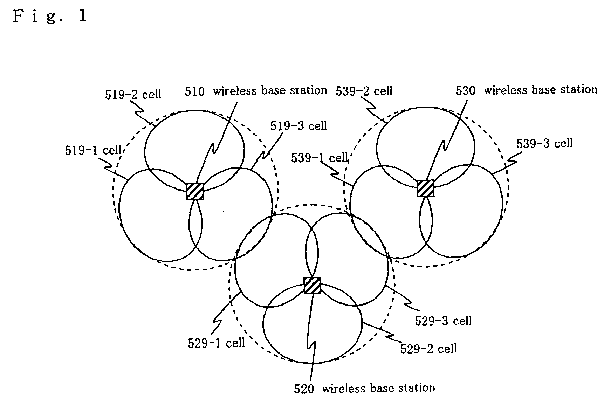

Figure 1 shows three wireless base stations arranged as an example of a configuration of an area covered by each wireless base station.

The example of the configuration includes wireless base stations 510, 520, and 530 adjacently mounted as shown in Figure 1, and the area covered by wireless base station 510 is divided into three cells 519-1 to 519-3, and the area covered by wireless base station 520 is divided into three cells 529-1 to 529-3. Furthermore, the area covered by wireless base station 530 is divided into three cells 539-1 to 539-3.

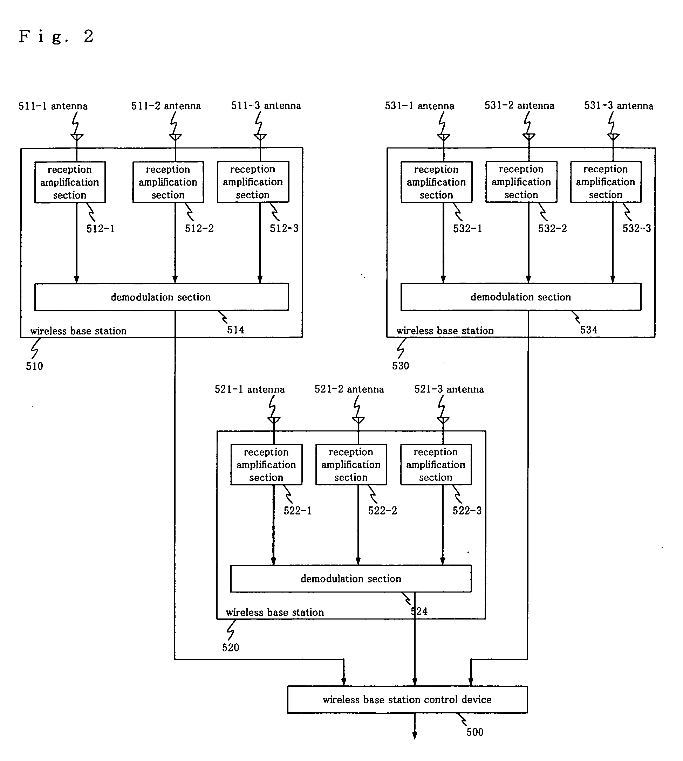

Figure 2 shows an example of a configuration of the wireless communication system according to related art.

The wireless communication system according to the related art includes wireless base stations 510, 520, and 530 shown in Figure 1 each connected to wireless base station control device 500 for control of the stations as shown in Figure 2. Wireless base station 510 is provided with antennas 511-1 through 511-3, reception amplification sections 512-1 to 512-3, and demodulation section 514. Antenna 511-1 transmits and receives a signal to communicate with a terminal when the terminal (not shown in the attached drawings) is present in cell 519-1 shown in Figure 1. Antenna 511-2 transmits and receives a signal to communicate with a terminal when the terminal is present in cell 519-2 shown in Figure 1. Antenna 511-3 transmits and receives a signal to communicate with a terminal when a terminal is present in cell 519-3. Reception amplification sections 512-1 to 512-3 amplify the signals received respectively by antennas 511-1 through 511-3. Demodulation section 514 demodulates the signals amplified by antennas 521-1 to 521-3. Wireless base station 520 is provided with antennas 521-1 to 521-3, reception amplification sections 522-1 to 522-3, and demodulation section 524. When a terminal is present in cell 529-1 shown in Figure 1, antenna 521-1 transmits and receives a signal for communication with the terminal. When a terminal is present in cell 529-2 shown in Figure 1, antenna 521-2 transmits and receives a signal for communication with the terminal. When a terminal is present in the cell 529-3 shown in Figure 1, antenna 521-3 transmits and receives a signal for communication with the terminal. Reception amplification sections 522-1 to 522-3 respectively amplify the signals received by antennas 521-1 to 521-3. Demodulation section 524 demodulates the signals amplified by reception amplification sections 522-1 to 522-3. Wireless base station 530 is provided with antennas 531-1 to 531-3, reception amplification sections 532-1 to 532-3, and demodulation section 534. When a terminal is present in cell 539-1 shown in Figure 1, antenna 531-1 transmits and receives a signal for communication with the terminal. When a terminal is present in cell 539-2 shown in Figure 1, antenna 531-2 transmits and receives a signal for communication with the terminal. When a terminal is present in cell 539-3 shown in Figure 1, antenna 531-3 transmits and receives a signal for communication with the terminal. Reception amplification sections 532-1 to 532-3 respectively amplify the signals received by antennas 531-1 to 531-3. Demodulation section 534 demodulates the signals amplified by reception amplification sections 532-1 to 532-3.

In the configuration shown in Figure 2, when a hand over state is detected after a terminal moves from cell 519-3 to cell 529-1, a signal received by wireless base station 510 and a signal received by wireless base station 520 are selected and combined by wireless base station control device 500. Otherwise, when a hand over state is detected after a terminal moves from cell 529-3 to cell 539-1, a signal received by wireless base station 520 and a signal received by wireless base station 530 are selected and combined by wireless base station control device 500.

Each of wireless base stations 510, 520, and 530 generates a transmission power control signal of a terminal based on the reception state of the received signal. The generated transmission power control signal is transmitted from each of wireless base stations 510, 520, and 530 to each terminal. Power control is performed depending on the transmission power control signal for setting the lowest possible transmission power in a plurality of transmission power control signals received by each terminal, and upstream data is transmitted from the terminal by the controlled transmission power.

In addition, there is a method of providing a plurality of peripheral base stations and a key base station connected to a mobile unit exchange station, that receive a wave transmitted from the peripheral base station after relaying the upstream radio wave transmitted from a terminal by a peripheral base station, and that receive a direct wave as upstream radio wave transmitted from the terminal, and that select the received data through a path in the best reception state in the received waves (For example, Japanese Patent Laid-Open No. 1995-264651).

However, in the above-mentioned wireless communication system, a wireless base station control device requires a procedure for performing hand over processing, and it is difficult to simplify a network configuration. In addition, since a terminal performs power control depending on the transmission power control signal for setting the lowest possible transmission power, upstream data is transmitted at a transmission level at which a sufficient reception level can be acquired with any one wireless base station, which results in a failure to efficiently use the power of the signal received by another wireless base station during hand over processing, and a wasting of the radio capacity of the upstream line.

In addition, in the method described in the patent document, a peripheral base station other than the key base station corresponding to the wireless base station control device cannot select or combine the upstream data transmitted from a terminal.

### Disclosure of the Invention

The present invention has been developed to solve the above-mentioned problems, and aims at providing a wireless communication system, a wireless base station, and a wireless communication method for simplifying a network configuration.

To realize the above-mentioned advantage, the present invention is a wireless communication system having a plurality of adjacent wireless base stations for communication with a terminal, and includes:
an antenna for receiving a signal transmitted from the terminal;
reception amplification means for amplifying a signal received by the antenna;
distribution means for distributing the signal amplified by the reception amplification means to a wireless base station; and
demodulation means for demodulating combined signals after combining a signal distributed by the distribution means of the adjacent wireless base station with the signal amplified by the reception amplification means of the wireless base station.

The adjacent wireless base station includes demodulation means for demodulating combined signals after combining the signal distributed by the distribution means of the wireless base station with the signal amplified by the reception amplification means of the adjacent wireless base station.

A demodulated signal is output to a host device from either the wireless base station or the adjacent wireless base station.

When the received power of the signal transmitted from the terminal and received by the antenna of the wireless base station is larger than the received power of the signal transmitted from the terminal and received by the antenna of the adjacent wireless base station, the signal demodulated by the wireless base station is output to the host device. Otherwise, the signal demodulated by the adjacent wireless base station is output to the host device.

The wireless base station generates a control signal for control of the transmission power of the terminal based on the reception state of the combined signal.

A wireless base station having an antenna for receiving a signal transmitted from a terminal, reception amplification means for amplifying the signal received by the antenna, and demodulation means for demodulating the signal amplified by the reception amplification means includes:
distribution means for distributing the signal amplified by the reception amplification means to an adjacent wireless base station, wherein
the demodulation means combines the signal distributed by the distribution means of the adjacent wireless base station with the signal amplified by the reception amplification means of the wireless base station.

When the received power of the signal transmitted from the terminal and received by the antenna of the wireless base station is larger than the received power of the signal transmitted from the terminal and received by the antenna of the adjacent wireless base station, the signal demodulated by the wireless base station is output to the host device.

A control signal for control of the transmission power of the terminal is generated based on the reception state of the combined signal.

A wireless communication method for communication between a terminal and a plurality of adjacent wireless base stations includes:
amplifying a signal transmitted from the terminal and received by the wireless base station;
distributing the amplified signal to an adjacent wireless base station;
combining the signal distributed by the adjacent wireless base station with the signal amplified by the wireless base station; and
demodulating the combined signal.

The method includes outputting a signal demodulated from either the wireless base station or the adjacent wireless base station to a host device.

When the received power of the signal transmitted from the terminal and received by the wireless base station is larger than the received power of the signal transmitted from the terminal and received by the adjacent wireless base station, the signal demodulated by the wireless base station is output to the host device. Otherwise, the signal demodulated by the adjacent wireless base station is output to the host device.

The method includes generating by the wireless base station a control signal to control the transmission power of the terminal based on the reception state of the combined signal.

According to the configuration of the present invention, a signal transmitted from a terminal is received by a plurality of adjacent wireless base stations, the signal received by the wireless base station is amplified, the amplified signal is distributed to an adjacent wireless base station, and the signal distributed by the adjacent wireless base station is combined with the signal amplified by the wireless base station, and then demodulated.

Thus, since the signal received by a plurality of wireless base stations is demodulated by one wireless base station and output to a host device, a wireless base station control device requires no selection or combination of the signals transmitted from a plurality of wireless base stations, thereby enabling means that allow omission of a wireless base station control device which leads to a simplified network configuration. Furthermore, received signals transmitted from a terminal and received by a plurality of wireless base stations are summed up by one wireless base station, and a control signal for controlling the transmission power of the terminal is generated based on the summed reception state and transmitted to the terminal, thereby reducing the transmission power for transmission of the control signal to the terminal, and increasing an upstream radio capacity.

As described above, according to the present invention, a signal transmitted from a terminal is received by a plurality of adjacent wireless base stations, the signal received by the wireless base station is amplified, the amplified signal is distributed to an adjacent wireless base station, and a signal distributed by the adjacent wireless base station is combined with a signal amplified by the wireless base station and then demodulated. Therefore, the configuration of a network can be simplified.

### Brief Description of the Drawings

Figure 1 shows an example of three wireless base stations mounted and a configuration of an area covered by each of the wireless base stations;

Figure 2 shows an example of a configuration of the wireless communication system according to the related art;

Figure 3 shows an example of three wireless base stations according to the present invention, and the area covered by each of the wireless base stations;

Figure 4 shows an exemplary embodiment of the wireless communication system according to the present invention; and

Figure 5 is a flowchart for explaining of the wireless communication method with the configuration shown in Figure 3 and according to the exemplary embodiment shown in Figure 4.

### Best Mode for Carrying Out the Invention

Described below is the exemplary embodiment of the present invention with reference to the attached drawings.

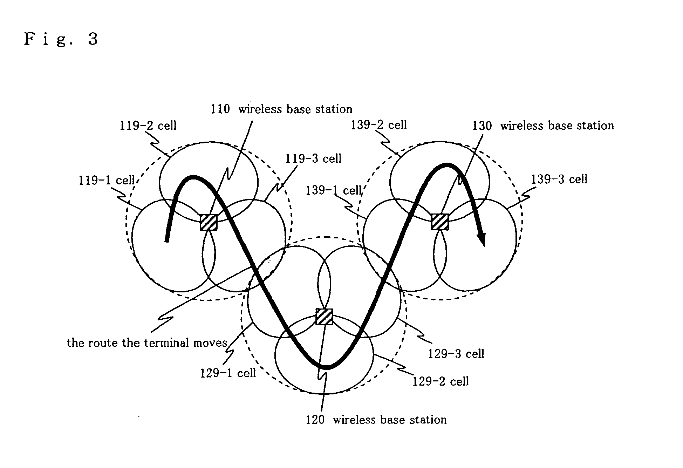

Figure 3 shows an example of three wireless base stations according to the present invention, and the area covered by each of the wireless base stations.

An example of the present configuration includes adjacent wireless base stations 110, 120, and 130 as shown in Figure 3, and the area covered by wireless base station 110 is divided into three cells 119-1 to 119-3. The area covered by wireless base station 120 is also divided into three cells 129-1 to 129-3. The area covered by wireless base station 130 is divided into three cells 139-1 to 139-3.

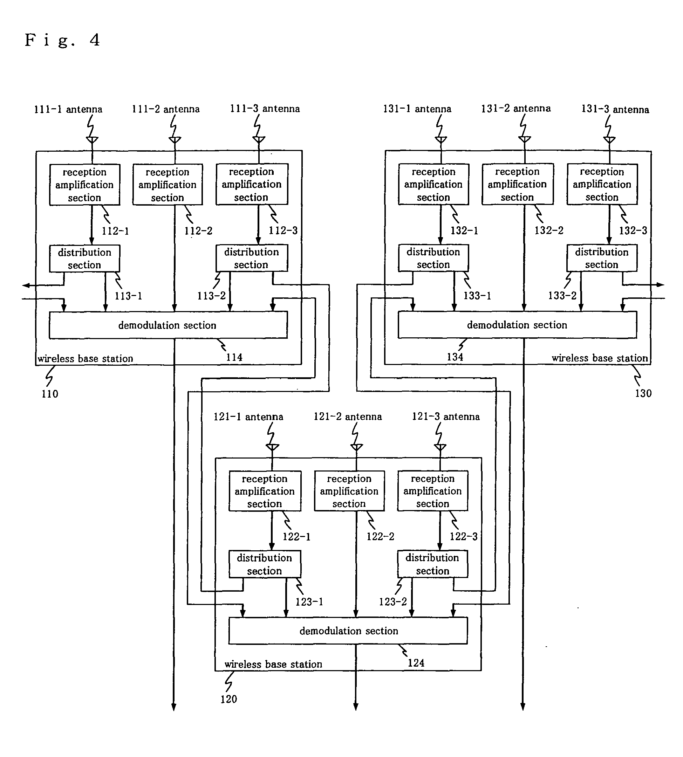

Figure 4 shows an exemplary embodiment of the wireless communication system according to the present invention.

The present embodiment includes wireless base stations 110, 120, and 130 as shown in Figure 4. In addition, wireless base station 110 is provided with antennas 111-1 to 111-3, reception amplification sections 112-1 to 112-3, distribution sections 113-1 and 113-2, and demodulation section 114. When a terminal (not shown in the attached drawings) is present in cell 119-1 shown in Figure 3, antenna 111-1 transmits and receives a signal for communication with the terminal. When a terminal is present in cell 119-2 shown in Figure 3, antenna 111-2 transmits and receives a signal for communication with the terminal. When a terminal is present in cell 119-3 shown in Figure 3, antenna 111-3 transmits and receives a signal for communication with the terminal. Reception amplification sections 112-1 to 112-3 amplify the signal received by antennas 111-1 to 111-3. Distribution section 113-1 distributes the value of the received power of the signal received by antenna 111-1, and the signal amplified by reception amplification section 112-1 to an adjacent wireless base station (not shown in the attached drawings) and to demodulation section 114. Distribution section 113-2 distributes the value of the received power of the signal received by antenna 111-3 and the signal amplified by reception amplification section 112-3 to wireless base station 120 and demodulation section 114. Demodulation section 114 combines the signal amplified by reception amplification sections 112-1 to 112-3 with the signal distributed and transmitted by the adjacent wireless base station, and demodulates the signal. Wireless base station 120 is provided with antennas 121-1 to 121-3, reception amplification sections 122-1 to 122-3, distribution sections 123-1 and 123-2, and demodulation section 124. When a terminal is present in cell 129-1 shown in Figure 3, antenna 121-1 transmits and receives a signal for communication with the terminal. When a terminal is present in cell 129-2 shown in Figure 3, antenna 121-2 transmits and receives a signal for communication with the terminal. When a terminal is present in cell 129-3 shown in Figure 3, antenna 121-3 transmits and receives a signal for communication with the terminal. Reception amplification sections 122-1 to 122-3 amplify the signals respectively received by antennas 121-1 to 121-3. Distribution section 123-1 distributes the value of the received power of the signal received by antenna 121-1, and the signal amplified by reception amplification section 122-1 to adjacent wireless base station 110 and demodulation section 124. Distribution section 123-2 distributes the value of the received power of the signal received by antenna 121-3 and the signal amplified by reception amplification section 122-3 to adjacent wireless base station 130 and demodulation section 124. Demodulation section 124 combines the signal amplified by reception amplification sections 122-1 to 122-3 with the signal distributed and transmitted by the adjacent wireless base station, and demodulates the signal. Wireless base station 130 is provided with antennas 131-1 to 131-3, reception amplification sections 132-1 to 132-3, distribution sections 133-1 and 133-2, and demodulation section 134. When a terminal is present in cell 139-1 shown in Figure 3, antenna 131-1 transmits and receives a signal for communication with the terminal. When a terminal is present in cell 139-2 shown in Figure 3, antenna 131-2 transmits and receives a signal for communication with the terminal. When a terminal is present in cell 139-3 shown in Figure 3, antenna 131-3 transmits and receives a signal for communication with the terminal. Reception amplification sections 132-1 to 132-3 amplify the signals respectively received by antennas 131-1 to 131-3. Distribution section 133-1 distributes the value of the received power of the signal received by antenna 131-1, and the signal amplified by reception amplification section 132-1 to adjacent wireless base station 120 and demodulation section 134. Distribution section 133-2 distributes the value of the received power of the signal received by antenna 131-3 and the signal amplified by reception amplification section 132-3 to wireless base station (not shown in the attached drawings) and to demodulation section 134. Demodulation section 134 combines the signal amplified by reception amplification sections 132-1 to 132-3 with the signal distributed and transmitted by the adjacent wireless base station, and demodulates the signal.

Described below is the wireless communication method according to the exemplary embodiment with the above-mentioned configuration.

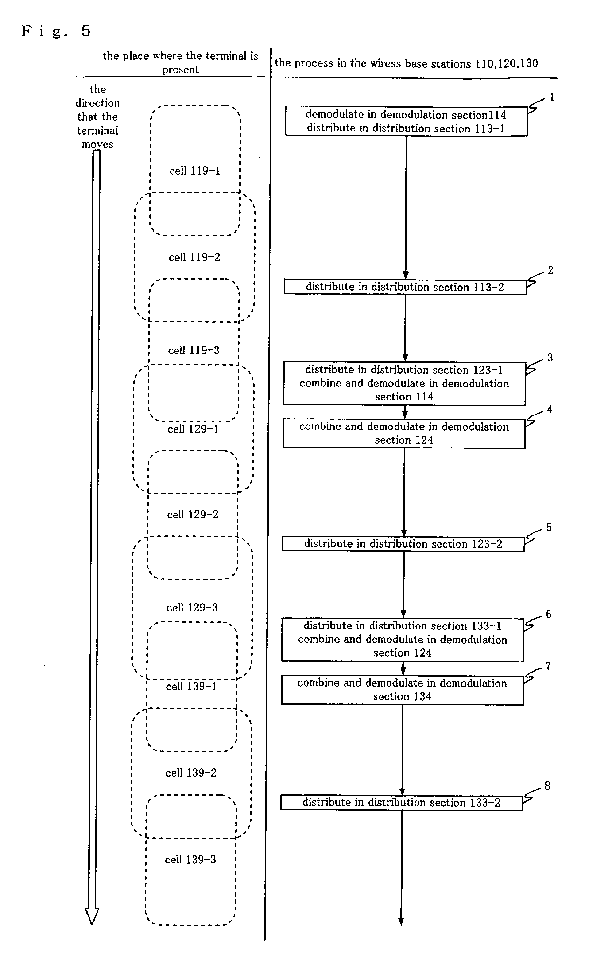

Figure 5 is a flowchart for explaining of the wireless communication method with the configuration shown in Figure 3 and according to the exemplary embodiment shown in Figure 4.

Assume that the terminal moves as indicated by the arrow mark shown in Figure 3, that is, from cells 119-1 to 119-3 to cells 139-1 to 139-3 through cells 129-1 to 129-3.

When the terminal stays in cell 119-1, a signal is transmitted and received to and from the terminal using antenna 111-1 of wireless base station 110. The signal received by antenna 111-1 is amplified by reception amplification section 112-1. In step 1, the signal amplified by reception amplification section 112-1 is distributed by distribution section 113-1 to an adjacent wireless base station (not shown in the attached drawings), and is simultaneously demodulated by demodulation section 114.

When the terminal moves and enters the area of cell 119-2, the signal transmitted from the terminal is received by antenna 111-2, and the received signal is amplified by reception amplification section 112-2. The signal amplified by reception amplification section 112-2 is combined with the signal amplified by reception amplification section 112-1, and is demodulated by demodulation section 114.

Then, when the terminal exits the area of cell 119-1, the signal transmitted from the terminal is not received by antenna 111-1 anymore.

When the terminal moves and enters the area of cell 119-3, the signal transmitted from the terminal is received by antenna 111-3, and the received signal is amplified by reception amplification section 112-3. The signal amplified by reception amplification section 112-3 is combined with the signal amplified by reception amplification section 112-2 by demodulation section 114, and is demodulated. In addition, the signal amplified by reception amplification section 112-3 is distributed by distribution section 113-2 to wireless base station 120 in step 2.

When the terminal exits the area of cell 119-2, the signal transmitted from the terminal is not received by antenna 111-2 anymore.

Furthermore, when the terminal moves and enters the area of cell 129-1, antenna 121-1 also receives the signal transmitted from the terminal. Then, the received signal is amplified by reception amplification section 122-1. In step 3, the signal amplified by reception amplification section 122-1 is distributed by distribution section 123-1 to wireless base station 110, and the signal distributed by distribution section 123-1 is combined with the signal amplified by reception amplification section 112-3 by demodulation section 114, and demodulated. At this time, the received power of the signal received by antenna 111-3 is compared with the received power of the signal received by antenna 121-1 by demodulation section 114 and demodulation section 124.

Next, if it is determined that the received power of the signal received by antenna 121-1 is larger than the received power of the signal received by antenna 111-3, then the signal distributed in step 4 by distribution section 113-1 is combined by demodulation section 124 of wireless base station 120 with the signal amplified by reception amplification section 122-1 and demodulated, and then simultaneously demodulation by demodulation section 114 of wireless base station 110 terminates. That is, if it is determined that the distance between the terminal and wireless base station 120 is shorter than the distance between the terminal and wireless base station 110, then the signal distributed by distribution section 113-1 is combined with the signal amplified by reception amplification section 122-1 by demodulation section 124 of wireless base station 120, and then simultaneously demodulation by demodulation section 114 of wireless base station 110 terminates.

Afterwards, when the terminal exits the area of cell 119-3, the signal transmitted from the terminal is not received by antenna 111-3 anymore.

When the terminal moves and enters the area of cell 129-2, the signal transmitted from the terminal is received by antenna 121-2. Then, the received signal is amplified by reception amplification section 122-2. The signal amplified by reception amplification section 122-2 is combined by demodulation section 124 with the signal amplified by reception amplification section 122-1, and then demodulated.

If the terminal exits the area of cell 129-1, then the signal transmitted from the terminal is not received by antenna 121-1 anymore.

Then, if the terminal enters the area of cell 129-3, the signal transmitted from the terminal is received by antenna 121-3, and the received signal is amplified by reception amplification section 122-3. The signal amplified by reception amplification section 122-3 is combined by demodulation section 124 with the signal amplified by reception amplification section 122-2, and then demodulated. In step 5, the signal amplified by reception amplification section 122-3 is distributed by distribution section 123-2 to wireless base station 130.

When the terminal exits the area of cell 129-2, the signal transmitted from the terminal is not received by antenna 121-2 anymore.

Then, when the terminal moves and enters the area of cell 139-1, the signal transmitted from the terminal is received by antenna 131-1, and the received signal is amplified by reception amplification section 132-1. The signal amplified by reception amplification section 132-1 is distributed by distribution section 133-1 to wireless base station 120 in step 6, the signal distributed by distribution section 133-1 is combined with the signal amplified by reception amplification section 122-3 by demodulation section 124, and then demodulated. At this time, the received power of the signal received by antenna 121-3 is compared with the received power of the signal received by antenna 131-1 by demodulation section 124 and demodulation section 134.

Afterwards, when it is determined that the received power of the signal received by antenna 131-1 is higher than the received power of the signal received by antenna 121-3, the signal distributed by distribution section 123-1 is combined with the signal amplified by distribution section 123-1 by demodulation section 134 of wireless base station 130 and then demodulated in step 7, and simultaneously demodulation by demodulation section 124 of wireless base station 120 terminates. That is, when it is determined that the distance between the terminal and wireless base station 130 becomes shorter than the distance between the terminal and wireless base station 120, the signal distributed by distribution section 123-1 is combined with the signal amplified by reception amplification section 132-1 by demodulation section 134 of wireless base station 130 and demodulated, and simultaneously demodulation by demodulation section 124 of wireless base station 120 terminates.

When the terminal exits the area of cell 129-3, the signal transmitted from the terminal is not received by antenna 121-3 anymore.

When the terminal moves and enters the area of cell 139-2, the signal transmitted from the terminal is received by antenna 131-2, and the received signal is amplified by reception amplification section 132-2. The signal amplified by reception amplification section 132-2 is combined by demodulation section 134 with the signal amplified by reception amplification section 132-1, and then demodulated.

Then, when the terminal exits the area of cell 139-1, the signal transmitted from the terminal is not received by antenna 131-1 anymore.

When the terminal enters the area of cell 139-3, the signal transmitted from the terminal is received by antenna 131-3, and the received signal is amplified by reception amplification section 132-3. The signal amplified by reception amplification section 132-3 is combined with the signal amplified by reception amplification section 132-2 by demodulation section 134 and demodulated. The signal amplified by reception amplification section 132-3 is distributed by distribution section 133-2 to an adjacent wireless base station (not shown in the attached drawings) in step 8.

The switching procedure of the wireless base station for performing the demodulation can be set as follows.

If the terminal additionally requests hand over processing of cell 129-2 while hand over processing is being performed between cell 119-3 and cell 129-1, then the information is transmitted from wireless base station 110 to wireless base station 120, and an instruction to perform hand over processing between cell 119-3, cell 129-1, and cell 129-2 is issued. Then, the output from wireless base station 110 to the host device is stopped, and simultaneously the output from wireless base station 120 to the host device is started.

Furthermore, the switching procedure of the wireless base station for performing the demodulation can be set as follows.

When hand over processing is performed between antenna 111-3 and antenna 121-1, and when the received power of the signal transmitted from the terminal and received by antenna 111-3 is higher than the received power of the signal transmitted from the terminal and received by antenna 121-1, demodulation section 114 of wireless base station 110 combines the signals and performs demodulation, and the demodulated signal is output from wireless base station 110 to the host device. Otherwise, demodulation section 124 of wireless base station 120 combines and performs demodulation, and the demodulated signal is output from wireless base station 120 to the host device. The same process is performed between antenna 121-3 and antenna 131-1.

Generally, based on the reception state of the signal transmitted from the terminal in the wireless base station, a control signal for controlling the transmission power is transmitted from the wireless base station to the terminal. In the present invention, a control signal for controlling the transmission power is generated based on the entire reception state including the signals received and distributed by a plurality of adjacent wireless base stations during hand over processing during demodulation in one wireless base station, and the signal can be transmitted to the terminal. Thus, the transmission power for transmission of the control signal to the terminal can be reduced, thereby increasing the upstream radio capacity.

The area in which the above-mentioned cells overlap each other is defined as an area where a terminal enters the hand over state.

In the example above, the number of wireless base stations is three, but the number of wireless base stations is not limited, and it is obvious that similar operations can be realized by a plurality of wireless base stations.

## Claims

1. A wireless communication system having a plurality of adjacent wireless base stations for communication with a terminal, comprising:
an antenna for receiving a signal transmitted from the terminal;
reception amplification means for amplifying a signal received by the antenna;
distribution means for distributing the signal amplified by the reception amplification means to a wireless base station; and
demodulation means for demodulating combined signals after combining a signal distributed by the distribution means of the adjacent wireless base station with the signal amplified by the reception amplification means of the wireless base station.

2. The wireless communication system according to claim 1, wherein
the adjacent wireless base station comprises demodulation means for demodulating combined signals after combining the signal distributed by the distribution means of the wireless base station with the signal amplified by the reception amplification means of the adjacent wireless base station.

3. The wireless communication system according to claim 2, wherein
a demodulated signal is output to a host device from either the wireless base station or the adjacent wireless base station.

4. The wireless communication system according to claim 3, wherein
when the received power of the signal transmitted from the terminal and received by the antenna of the wireless base station is larger than the received power of the signal transmitted from the terminal and received by the antenna of the adjacent wireless base station, the signal demodulated by the wireless base station is output to the host device, and otherwise, the signal demodulated by the adjacent wireless base station is output to the host device.

5. The wireless communication system according to claim 1, wherein
the wireless base station generates a control signal for controlling the transmission power of the terminal based on a reception state of the combined signal.

6. A wireless base station having an antenna for receiving a signal transmitted from a terminal, reception amplification means for amplifying the signal received by the antenna, and demodulation means for demodulating the signal amplified by the reception amplification means, comprising:
distribution means for distributing the signal amplified by the reception amplification means to an adjacent wireless base station, wherein
the demodulation means combines the signal distributed by the distribution means of the adjacent wireless base station with the signal amplified by the reception amplification means of the wireless base station.

7. The wireless base station according to claim 6, wherein
when the received power of the signal transmitted from the terminal and received by the antenna of the wireless base station is larger than the received power of the signal transmitted from the terminal and received by the antenna of the adjacent wireless base station, the signal demodulated by the wireless base station is output to the host device.

8. The wireless base station according to claim 6, wherein
a control signal for controlling the transmission power of the terminal is generated based on the reception state of the combined signal.

9. A wireless communication method for communication between a terminal and a plurality of adjacent wireless base stations, comprising:
amplifying a signal transmitted from the terminal and received by the wireless base station;
distributing the amplified signal to an adjacent wireless base station;
combining the signal distributed by the adjacent wireless base station with the signal amplified by the wireless base station; and
demodulating the combined signal.

10. The wireless communication method according to claim 9, wherein
a demodulated signal is output from either the wireless base station or the adjacent wireless base station to a host device.

11. The wireless communication method according to claim 10, wherein
when the received power of the signal transmitted from the terminal and received by the wireless base station is larger than the received power of the signal transmitted from the terminal and received by the adjacent wireless base station, the signal demodulated by the wireless base station is output to the host device, and otherwise, the signal demodulated by the adjacent wireless base station is output to the host device.

12. The wireless communication method according to claim 9, wherein
the wireless base station generates a control signal for controlling the transmission power of the terminal based on a reception state of the combined signal.
